# EUROPÄISCHE PATENTSCHRIFT

(11) **EP 0 437 201 B1**
(45) Veröffentlichungstag und Bekanntmachung des Hinweises auf die Patenterteilung: **20.07.1994**
(21) Anmeldenummer: 91100053.7
(22) Anmeldetag: 02.01.1991
(51) Int. Cl.: B65B 19/02, B65C 1/04

(54) **Vorrichtung zur Formstabilisierung quaderförmiger (Zigaretten-)Packungen**
Device for stabilizing the shape of parallelepipidal ((cigarettes) packages
Dispositif de stabilisation de forme d'emballages (pour cigarettes) parallépipédiques

(30) Priorität: 12.01.1990 DE 4000685
(43) Veröffentlichungstag der Anmeldung: 17.07.1991
(73) Patentinhaber: Focke & Co. (GmbH & Co.), 27283 Verden (DE)
(72) Erfinder: Focke, Heinz, W-2810 Verden (DE)
(74) Vertreter: Bolte, Erich, Dipl.-Ing.

(56) Entgegenhaltungen:
- FR-A- 2 359 032
- FR-A- 2 409 914
- GB-A- 2 189 429
- US-A- 4 620 891

## Beschreibung

Die Erfindung betrifft eine Vorrichtung zur Formgebung bzw. Formstabilisierung von quaderförmigen miteinander verklebten Faltlappen aufweisenden (Zigaretten-)Packungen, mit langgestreckten, schachtförmigen Packungshaltern, deren Querschnitt dem der Packungen entspricht und die an einem Endlosförderer mit zueinander parallen Längsachsen angeordnet sind, wobei Packungen über eine Einschuböffnung in den Packungshalter einführbar sind und dabei sich im Packungshalter befindene Packungen verschieben.

Eine solche Vorrichtung ist bekannt aus der US-A 4 620 891. Bei dieser vorbekannten Vorrichtung werden die Packungen während eines Stillstands eines Trockenrevolvers in achsparalleler Richtung aus einer sich in Ausschubstellung befindenen Tasche ausgeschoben in einen weiteren Revolver. Dieser Revolver besteht aus mehreren achsparallelen Taschen, in die die Packungen nach Verlassen des Trockenrevolvers eingeschoben werden. Die zuerst eingestoßene Packung wird queraxial, also quer zur Einschubrichtung, durch einen Schieber ausgestoßen.

Durch die GB-A 2 189 429 ist eine Vorrichtung bekannt, bei der Packungen durch schachtförmige Packungshalter aufgenommen werden, die sich in radialer Richtung erstrecken. Die Packungen werden dabei an der radial außenliegenden Seite der Packungshalter zugeführt und auf der radial innenliegenden Seite der Packungshalter in axialer Richtung ausgestossen.

Der Erfindung liegt die Aufgabe zugrunde, die Leistungsfähigkeit der gattungsgemäßen Vorrichtung zu steigern.

Zur Lösung dieser Aufgabe ist die erfindungsgemäße Vorrichtung durch folgende Merkmale gekennzeichnet:
a) die Packungshalter sind als beidendig offene Pakkungsrohre ausgebildet, in denen die Packungen mit wechselseitiger Abstützung verschiebbar sind, derart, daß durch den Einschub einer Packung in ein Packungsrohr eine sich in diesem befindene Packung aus einer der Einschuböffnung gegenüberliegenden Austrittsöffnung ausschiebbar ist,
b) eine Vielzahl von Packungsrohren ist durch den Endlosförderer kontinuierlich umlaufend bewegbar, wobei sich im Bereich einer Übergabestrecke die Einführung einer neuen Packung in ein sowie der Ausschub einer Packung aus dem Packungsrohr erfolgt,
c) einen Packungsförderer, durch den die Packungen synchron mit den Packungsrohren kontinuierlich in queraxialer Richtung transportierbar und dabei auf die Einschuböffnung der Packungsrohre ausgerichtet sind, derart, daß die Pakkungen während des gemeinsamen Transports durch synchron mit den Packungen bewegte Einschuborgane in Längsrichtung in die zugeordneten Packungsrohre einschiebbar sind.

Die schachtförmigen Packungshalter sind als Packungsröhre mit entsprechend der Querschnittsform der Packungen rechteckigen oder sonstigem Querschnitt ausgebildet. Erfindungsgemäß ist die Vorrichtung aus kontinuierlichem Betrieb ausgelegt. Die Übergabe der Packungen findet während der kontinuierlichen Bewegung des die Packungsrohre tragenden Endlosförderers statt. Entsprechend wird auch das Einschuborgan synchron mit den Packungen bewegt. Durch den Einschub einer Packung in ein Packungsrohr verläßt gleichzeitig auf der gegenüberliegenden Seite eine formatierte und im Bereich der Leimstellen abgebundene Packung das Packungsrohr.

Die axiale Länge des Packungsrohrs und die Größe des Endlosförderers bestimmen die Kapazität der Vorrichtung zur Aufnahme von Packungen während des Formgebungs- uns Stabilisierungsvorgangs. Der kontinuierliche Antrieb des Endlosförderers ermöglicht eine hohe Leistung.

Die erfindungsgemäße Vorrichtung ermöglicht die Lösung eines weiteren Problems bei der Herstellung bzw. Komplettierung von Packungen, insbesondere Zigaretten-Pakkungen. Letztere werden vielfach mit einer Steuerbanderole bzw. einem Verschlußstreifen versehen, der quer über eine Stirnfläche der Packungen angebracht und mit Schenkeln im Bereich angrenzender Vorder- bzw. Rückseiten endet.

Die Banderolen werden dabei erfindungsgemäß durch Saugbohrungen an den Stirnseiten der Packungsrohre fixiert und von diesen schlupfend abgezogen. Die Saugbohrungen sind dabei mittig im Bereich von Oberwand und Bodenwand angebracht. Die Versorgung der Saugbohrung mit Unterdruck erfolgt über ein zentrales, mit den umlaufenden Packungsrohren synchron laufendes Verteilorgan.

Weitere Merkmale der Erfindung betreffen die Ausbildung der Packungsrohre, deren Anbringung an dem Endlosförderer, die Ausbildung eines Packungsförderers und Organe für die Zuführung und Bereithaltung der Banderole oder dergleichen.

Ausführungsbeispiele der Erfindung werden nachfolgend anhand der Zeichnungen näher erläutert. Es zeigt:

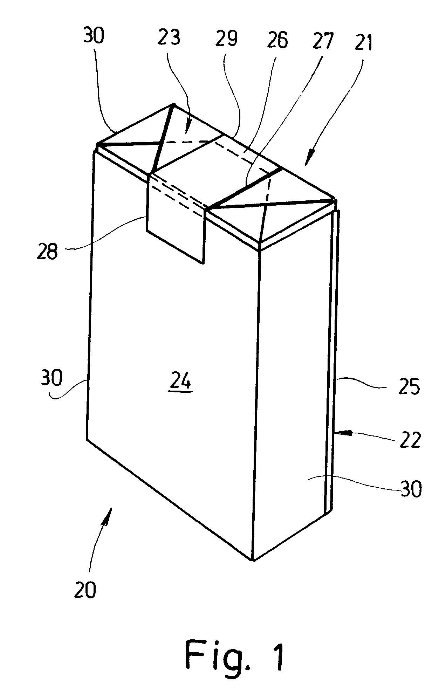

- Fig. 1: Eine Packung, nämlich eine Weichbecher-Packung für Zigaretten, in perspektivischer Darstellung,
- Fig. 2: eine Übersichtsdarstellung der Vorrichtung zur Behandlung von Packungen in Seitenansicht,
- Fig. 3: einen Ausschnitt der Vorrichtung gemäß Fig. 2 in vergrößertem Maßstab,

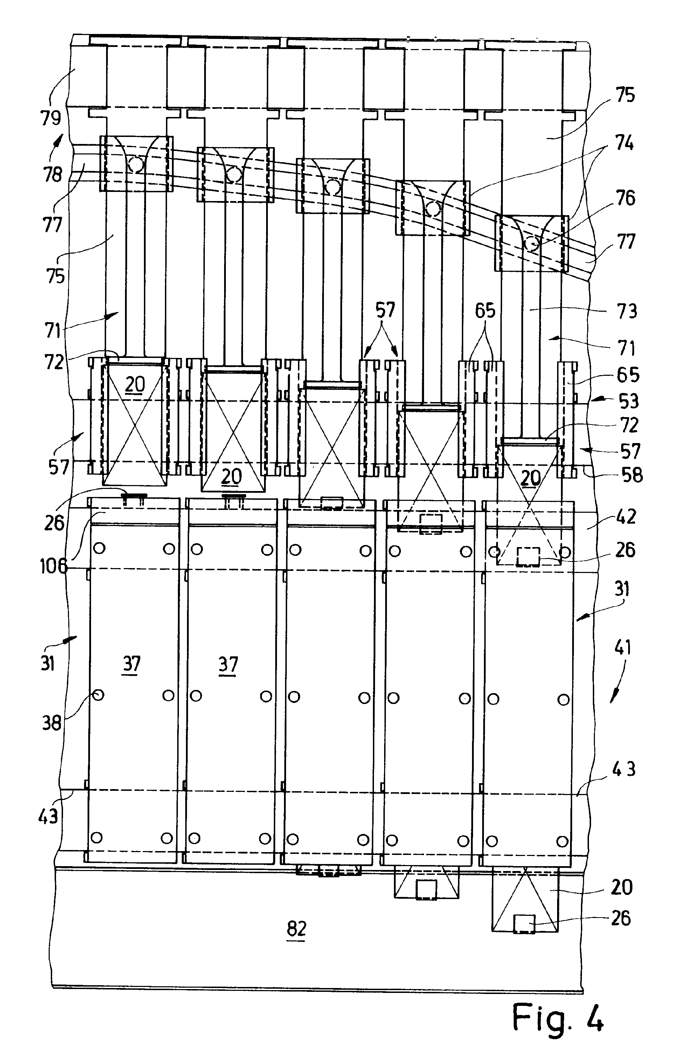

- Fig. 4: einen Ausschnitt der Vorrichtung im Grundriß (Draufsicht), gemäß Pfeil IV,

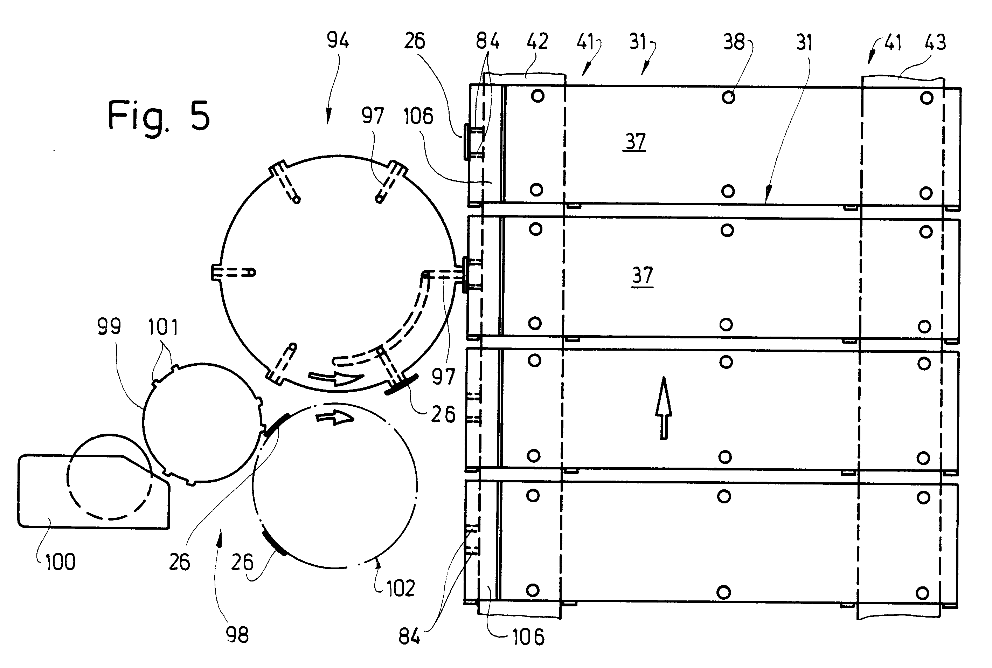

- Fig. 5: einen anderen Ausschnitt der Vorrichtung gemäß Fig. 2, im Bereich der Zuführung von Banderolen in Seitenansicht gemäß Pfeil V,
- Fig. 6: einen Querschnitt durch die Vorrichtung gemäß Fig. 2 in der Schnittebene VI-VI,

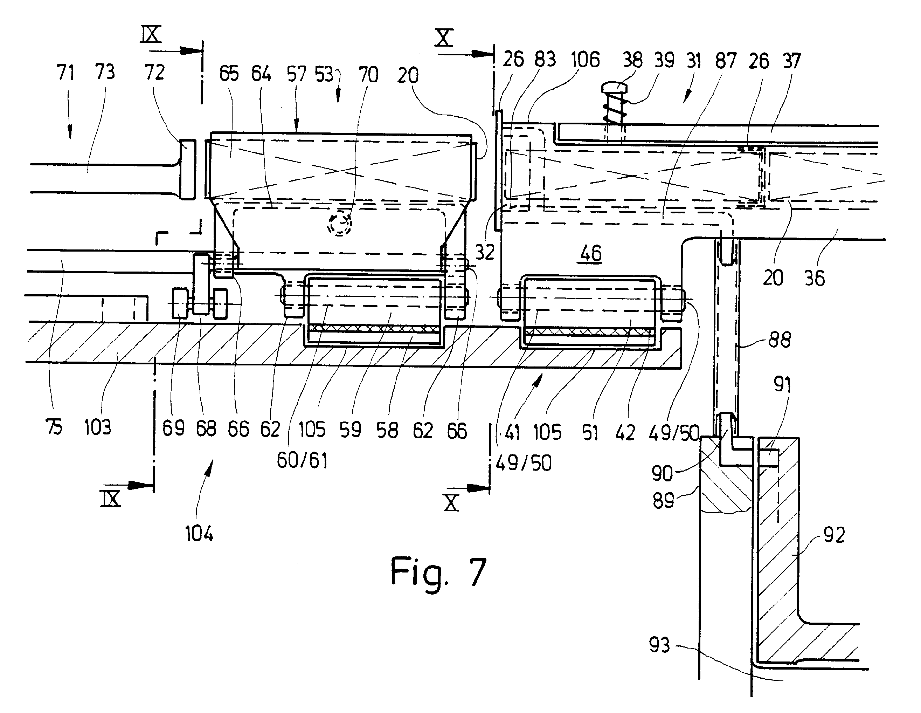

- Fig. 7: einen (mittleren) Ausschnitt der Darstellung gemäß Fig. 6,
- Fig. 8: einen Querschnitt in der Ebene VIII-VIII der Fig. 6,
- Fig. 9: einen Querschnitt in der Ebene IX-IX der Fig. 6

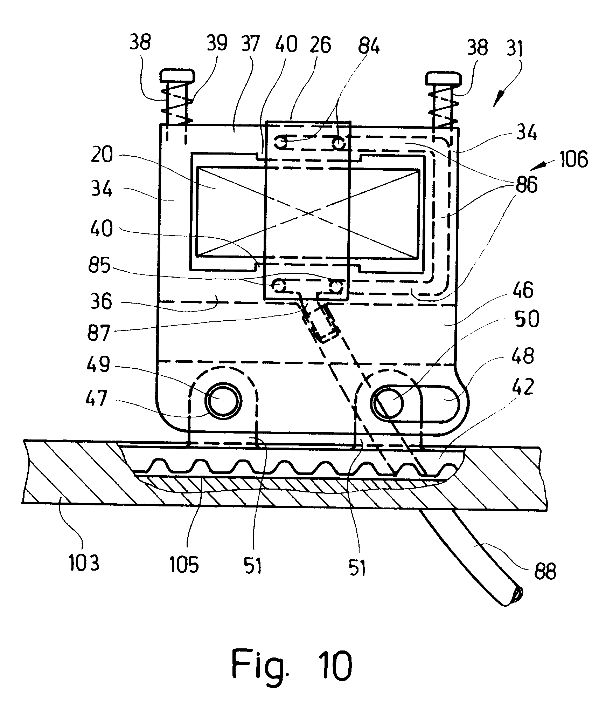

- Fig. 10: einen Querschnitt in der Ebene X-X der Fig. 6,
- Fig. 11: einen oberen Bereich eines Packungsrohrs in Aussicht vom Austrittsende.

Die in den Zeichnungen als Ausführungsbeispiel dargestellte Vorrichtung ist besonderes geeignet für die Behandlung von quaderförmigen Packungen 20 des Typs Weichbecher für die Aufnahme von Zigaretten. Packungen 20 dieser Art bestehen aus einer Innenumhüllung - üblicherweise aus Stanniol - für eine Zigaretten-Gruppe. Die Innenumhüllung umgibt die Zigaretten-Gruppe allseitig und bildet so einen Zigaretten-Block 21. Eine Außenumhüllung besteht üblicherweise aus Papier und ist als Becher 22 ausgebildet, also oben offen. Der Zigarettenblock 21 ragt an der Oberseite geringfügig aus dem Becher 22 heraus.

Die so ausgebildete Packung weist unter anderem eine (obere) Stirnfläche 23 und daran anschließende, einander gegenüberliegende rechteckige Flächen, nämlich Vorderseite 24 und Rückseite 25 auf. Die Packung ist demnach insgesamt quaderförmig. Über die Stirnfläche 23 erstreckt sich ein durch Klebung befestigter Materialstreifen bzw. Zuschnitt, nämlich eine (Steuer-)Banderole 26. Diese liegt mit einem mittleren Bereich 27 an der Stirnfläche 23 an. Schenkel 28, 29 erstrecken sich im Bereich von Vorderseite 24 und Rückseite 25.

Die Packung 20 weist mehrere Leimverbindungen auf, und zwar im Bereich von einander überdeckenden Faltlappen. Insbesondere ist der Becher 22 mit durch Klebung verbundenen Faltlappen versehen, die im Bereich eines Bodens (gegenüber der Stirnfläche 23) und/oder im Bereich einer Seitenfläche 30 bzw. zweier einander gegenüberliegender Seitenflächen 30 gebildet sind.

Ein wichtiges Anliegen der Vorrichtung besteht darin, das Abbinden von Leimstellen der Packung 20 zu ermöglichen bei gleichzeitiger Erhaltung bzw. Stabilisierung der quaderförmigen Kontur.

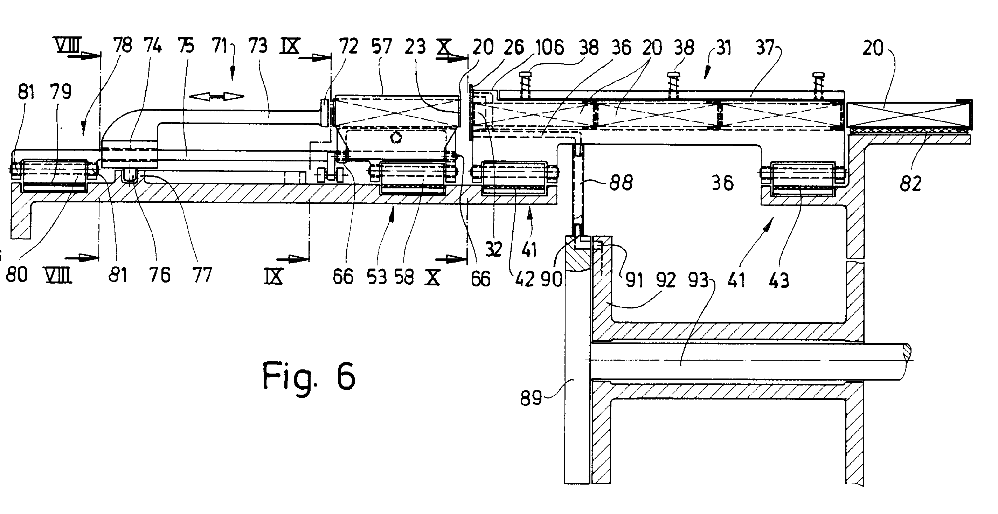

Zu diesem Zweck werden die Packungen 20 unmittelbar nach der Fertigstellung, also mit "frischen" Leimstellen, in Halterungen bzw. Taschen eingeführt, die dem (Querschnitts-)Format der Packungen 20 entsprechen und diese demnach formschlüssig umgeben. Bei dem vorliegenden Ausführungsbeispiel ist die Vorrichtung mit langgestreckten, hülsenförmigen Halterungen für die Packungen 20 ausgerüstet, nämlich mit Packungsrohren 31, in denen jeweils eine größere Anzahl von Packungen 20 - bei dem dargestellten Ausführungsbeispiel (Fig. 6) jeweils drei Packungen 20 - Aufnahme finden. Die Packungsrohre 31 sind an beiden Enden offen, so daß die Packungen 20 an einem Ende, nämlich über eine Einschuböffnung 32, in das Packungsrohr 31 in Längsrichtung desselben einschiebbar sind. Auf der gegenüberliegenden Seite verläßt durch den Einschubvorgang gleichzeitig eine Packung 20 das Packungsrohr 31 über eine Austrittsöffnung 33.

Die Packungen 20 werden mit der Stirnfläche 23 nach vorn weisend in das Packungsrohr 31 eingeschoben. Dieses hat einen freien Innenquerschnitt, der dem (kleineren) Querschnitt der Packung 20 entspricht. Die Seitenflächen 30 der Packung 20 liegen an Seitenwänden 34 des Packungsrohrs 31 an. Die Stirnflächen 23 stützen sich auf Bodenflächen 35 benachbarter Packungen 20 innerhalb des Packungsrohrs 31 ab.

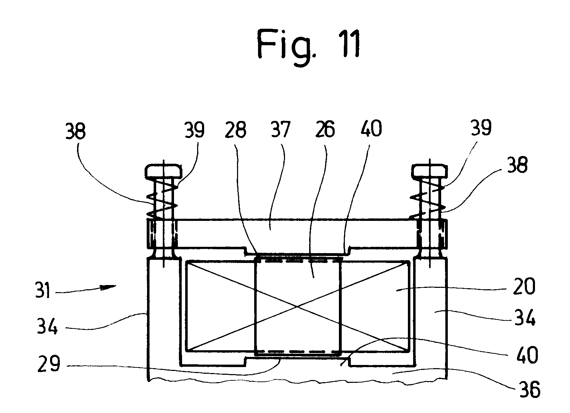

Eine vorteilhafte Ausführungsform für die Querschnittsgestaltung des Packungsrohrs 31 ergibt sich insbesondere aus Fig. 11. Danach bilden eine Bodenwand 36 mit den Seitenwänden 34 eine Einheit, nämlich ein im Querschnitt U-förmiges Profil. Eine Oberwand 37 ist als gesondertes Element ausgebildet und bewegbar an den Seitenwänden 34 befestigt. Diese ist zu diesem Zweck mit (aufrechten) Tragbolzen 38 versehen, auf denen die Oberwand 37 mit entsprechenden Bohrungen verschiebbar gelagert ist. Die Oberwand 37 wird mit elastischem Druck an die nach oben gerichtete Seite der Packungen 20 angedrückt, im vorliegenden Falle durch auf den Tragbolzen 38 angeordnete Druckfedern 39. Dadurch wird ein formgebender Druck auf die Packungen 20 im Packungsrohr 31 ausgeübt.

Bodenwand 36 und Oberwand 37 liegen nicht vollflächig an den Packungen 20 an, sondern mit stegartigen Erhöhungen 40. Diese erstrecken sich im mittleren Bereich des Packungsrohrs 31, mit einer Breite, die größer ist, als die der (ebenfalls mittigen) Banderole 26.

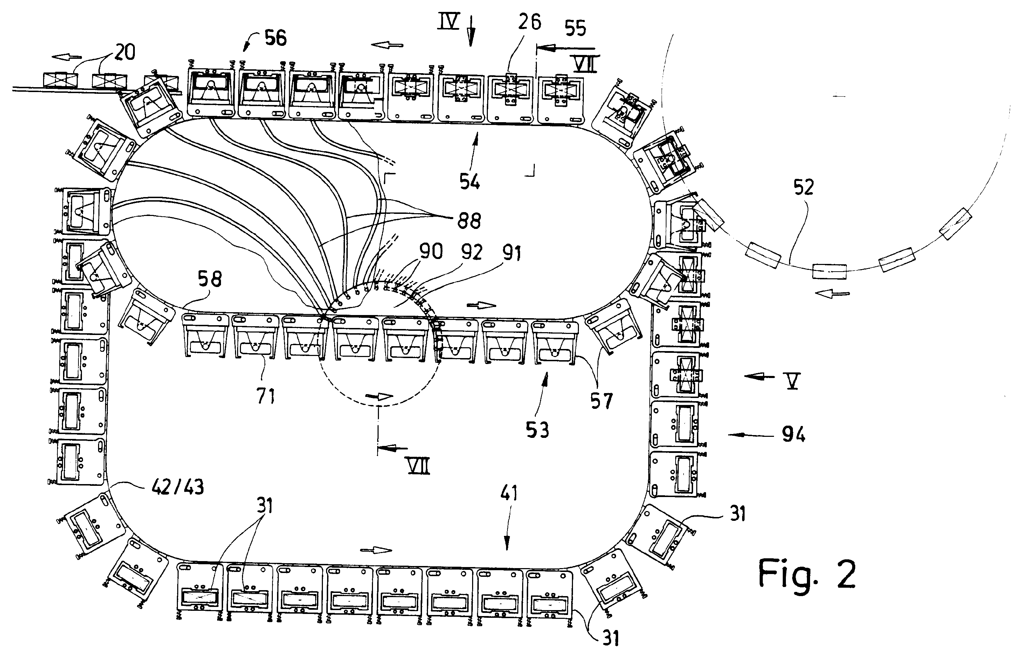

Eine Vielzahl von so ausgebildeten Trockenrohren ist an einem Endlosförderer nebeneinander in paralleler Ausrichtung und mit geringem Abstand voneinander angeordnet. Der Endlosförderer ist im vorliegenden Falle ein Hüllförderer, der über mehrere, im vorliegenden Falle vier Umlenkrollen (nicht gezeigt) läuft. Die sich so ergebende Kontur eines Rohrförderers 41 mit quer zur Bewegungsrichtung weisenden Packungsrohren 31 ergibt sich aus Fig. 2.

Zur Bildung des Endlosförderers mit den Packungsrohren 31 sind diese an zwei im Abstand voneinander angeordneten Band- bzw. Riemenförderern angebracht, im vorliegenden Falle an Zahnriemen 42, 43.

Die Packungsrohre 31 sind zur Befestigung an den Zahnriemen 42, 43 an ihrer Unterseite mit Verbindungslaschen 46 versehen. Diese weisen eine Bohrung 47 und mit Abstand hiervon ein Langloch 48 auf. Enden von mit dem Zahnriemen 42, 43 fest verbundenen Lagerbolzen 49, 50 treten in das Langloch 48 bzw. in die Bohrung 47 der Verbindungslaschen 46 ein. Die Lagerbolzen 49, 50 sind in wulstförmigen Ansätzen 51 an der zugekehrten bzw. oberen Seite des Zahnriemens 42, 43 durch Einbetten verankert.

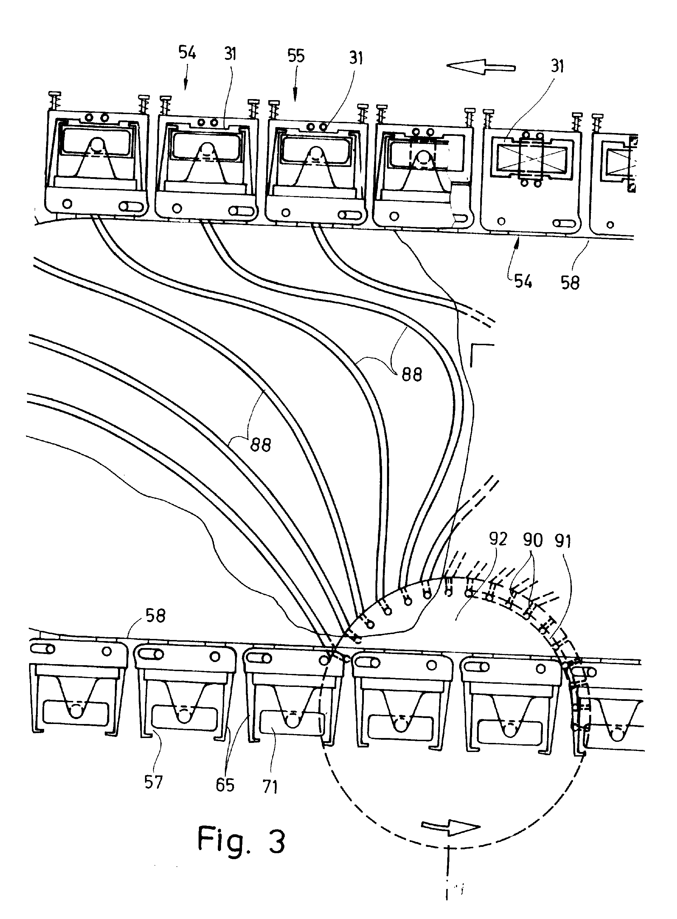

Durch die Lagerung eines der Lagerbolzen in einem Langloch 48 werden Relativbewegungen ermöglicht, die sich durch die Umlenkung der Zahnriemen 42, 43 im Bereich der (nicht dargestellten) Umlenkräder ergeben (z. B. Fig. 3).

Die fertig gefalteten und im Bereich der Faltlappen verleimten Packungen 20 werden unmittelbar von einem Faltrevolver 52 (oder einem entsprechend ausgebildeten Zwischenförderer) zugeführt. Die Packungen 20 werden sodann von einem Packungsförderer 53 übernommen, der hier ebenfalls als Endlosförderer ausgebildet ist. Der Packungsförderer 53 verläuft in einer zum Rohrförderer 41 versetzten Ebene. Ein oberer Fördertrum 54 des Packungsförderers 53 und ein hier gleichlanger Aufnahmetrum 55 verlaufen längs einer ausreichenden Förderstrecke synchron zueinander. Es handelt sich dabei um eine Übergabestrecke 56, in deren Bereich die Packungen 20 von dem Packungsförderer 53 an den Rohrförderer 41 übergeben werden. Diese Packungsübergabe von einem Förderer zum anderen erfolgt während fortlaufender kontinuierlicher Förderbewegung beider Förderer 41 und 53.

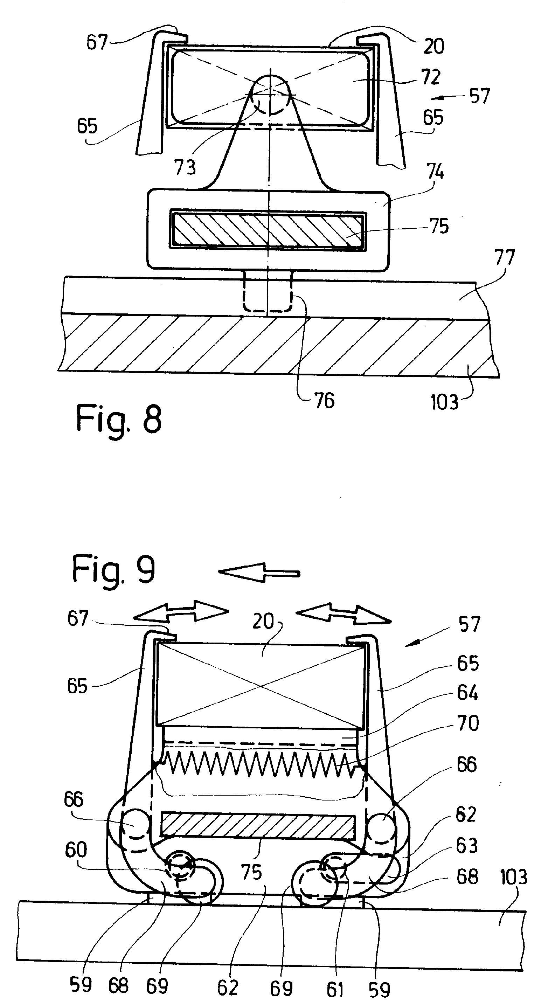

Der Packungsförderer 53 ist mit eng nebeneinanderliegenden Taschen 57, je zur Aufnahme einer Packung, bestückt. Die Taschen sind an einem elastischen Endlosförderer, nämlich einem Zahnriemen 58, angebracht. Dieser ist analog zu dem Ausführungsbeispiel der Fig. 9 mit zwei im Abstand voneinander angeordneten und an der Oberseite angeformten Ansätzen 59 versehen. Durch diese treten Lagerbolzen 60, 61 hindurch. Auf deren Enden wiederum sind Stege 62 abgestützt, und zwar auf dem Lagerbolzen 61 mit einem Langloch 63. Die Stege 62 wiederum sind Teil eines Taschenbodens 64, auf dem die Packung 20 aufliegt. Seitlich, nämlich im Bereich der schmalen Seitenflächen 30, ist die Packung 20 durch bewegbare Taschenwände 65 begrenzt. Diese sind mit entsprechenden Verlängerungen als zweiarmige, schwenkbare Hebel ausgebildet und jeweils um ein Zapflager 66 schwenkbar. Die oberen, freien Ränder der Taschenwände 65 sind mit quergerichteten Haltschenkeln 67 ausgebildet, so daß die Packungen 20 an der oberen bzw. äußeren Seite hakenförmig umfaßt werden.

Zur Aufnahme einer Packung 20 vom Faltrevolver 52 werden die Taschen 57 an der radial außenliegenden Seite geöffnet durch Auseinanderbewegen der Taschenwände 65. Zu diesem Zweck werden Betätigungsarme 68 im Bereich der Öffnung der Taschen 57 entsprechend beaufschlagt. An den Enden der Betätigungsarme 68 sind Stützrollen 69 angebracht. Diese laufen auf entsprechend ausgebildete Kurvenbahnen (nicht gezeigt) auf, so daß über die bogenförmig gestalteten Betätigungsarme 68 die Taschenwände 65 in die Öffnungsstellung bewegt werden. Diese sind durch eine die einander gegenüberliegenden Taschenwände 65 miteinander verbindende Zugfeder 70 ständig in Schließstellung belastet.

Die Taschenwände 65 sind in Schließstellung der Taschen 67 (Fig. 8, Fig. 9) so angeordnet, daß die Packungen 20 in Längsrichtung aus den an beiden Seiten offenen Taschen 57 ausgeschoben werden können. Hierfür ist jeder Tasche 57 ein Schieber 71 zugeordnet, der mit der zugeordneten Tasche 57 kontinuierlich umläuft. Der Schieber besteht aus einer Schieberplatte 72, die die Packung 20 an ihrer Bodenfläche 35 erfaßt. Eine langgestreckte Schieberstange 73 ist mit einem Gleitstück 74 verbunden, welches auf einer Traverse 75 verschiebbar gelagert ist. Diese erstreckt sich parallel zur Bewegungsbahn des Schiebers 71 bzw. horizontal.

Der Schieber 71 wird selbsttätig gesteuert, und zwar nach Maßgabe der Förderbewegung der Tasche 57 im Bereich der Übergabestrecke 56. Zu diesem Zweck ist an dem Gleitstück 74 ein Führungsstift 76 angebracht, der in eine feststehende Kurvennut 77 eingreift. Die Kurvennut 77 ist so gestaltet, daß bei fortlaufender Förderbewegung der Tasche 57 mit Schieber 71 dieser die Ausschubbewegung vollzieht, derart, daß die Packung 20 aus der Tasche 57 in ein unmittelbar gegenüberliegendes Packungsrohr 31 des Rohrförderers 41 gelangt. Danach kehrt der Schieber 71 in die Ausgangsstellung zurück.

Der Packungsförderer 53 ist mit einem gesonderten Schieberförderer 78 zu einer Fördereinheit verbunden. Mit Abstand vom Packungsförderer 53 bzw. dessen Zahnriemen 58 verläuft ein weiterer Endlosförderer, nämlich ein Zahnriemen 79. Dieser ist in ähnlicher Weise ausgebildet wie die bereits beschriebenen Ausführungsbeispiele von Zahnriemen. An der Oberseite sind in angeformten Ansätzen Lagerbolzen 80 gehalten. Auf deren Enden sind mit der Traverse 75 verbundene Stege 81 abgestützt und befestigt. Damit ist das freie, von dem Packungsförderer 53 abliegende Ende der Traversen 75 an dem Zahnriemen 79 befestigt. Das andere Ende ist mit der Tasche 57 und dadurch mit dem Zahriemen 58 des Packungsförderers 53 verbunden. Die so gebildete Einheit mit zwei Zahnriemen 58, 79 wird entsprechend kontinuierlich bewegt, synchron mit dem Rohrförderer 41.

Durch den Einschub einer Packung 20 mit dem Schieber 71 in das Packungsrohr 31 wird gleichzeitig über die Austrittsöffnung 33 eine Packung 20 aus dem Packungsrohr 31 ausgeschoben. Jede Packung 20 ist dann mehrmals mit dem Rohrförderer 41 umgelaufen bei entsprechender Verweildauer im Packungsrohr 31, und zwar unter schrittweiser Vorschubbewegung zur Austrittsöffnung 33. Die fertig abgebundenen Packungen 20 gelangen auf einen Abförderer 82, der sich unmittelbar benachbart zur Austrittsöffnung 33 erstreckt.

Bei dem dargestellten Ausführungsbeispiel wird die Packung 20 im Bereich der Stirnfläche 23 mit der Banderole 26 versehen. Diese wird an der Einschuböffnung 32 vor jedem Packungsrohr 31 bereitgehalten, so daß sich die Banderole 26 beim Einschub der Packung 20 in das Packungsrohr 31 U-förmig über die Stirnfläche 23 und angrenzende Packungsflächen legt. Die Packungsrohre 31 sind im Bereich der Einschuböffnung 32 an Bodenwand 36 und Oberwand 37 mit Abschrägungen 83 versehen.

Die Einschuböffnung 32 wirkt hier als Mundstück, welches auch in anderer Weise ausgebildet sein kann, insbesondere nicht Teil eines Packungsrohrs sein muß. Von Bedeutung ist aber, daß mehrere Packungen 20 aufeinanderfolgend in Dichtlage transportiert werden, wobei die Stirnfläche 23 und die Bodenfläche 35 benachbarter Packungen 20 sich wechselseitig abstützend aneinanderliegen. Die Banderole 26 wird dabei zwischen den vorgenannten Packungsflächen benachbarter Packungen zusätzlich fixiert, so daß unerwünschte Positionsveränderungen bis zum Abbinden von Beleimungen der Banderole 26 vermieden werden.

Die Banderole 26 wird im Bereich der Übergabestrecke 56 in aufrechter Position vor der Einschuböffnung 32 bereitgehalten. Die Banderole 26 liegt dabei an der Stirnseite der Packungsrohre 31 an, und zwar an der Bodenwand 36 einerseits und der Oberwand 37 andererseits, mittig zur Einschuböffnung 32.

Zum (lösbaren) Fixieren und Positionieren der Banderolen 26 in dieser Position münden an den Stirnflächen von Bodenwand 36 und Oberwand 37 im Bereich der Banderole 26 Saugbohrungen 84, 85. Bei dem vorliegenden Beispiel sind jeweils zwei im Abstand voneinander liegende Saugbohrungen 84, 85 vorhanden. An diese schließen Saugkanäle 86 im Bereich von Oberwand 37, Seitenwand 34 und Bodenwand 36 des Packungsrohrs 31 an. In Längsrichtung desselben verläuft in der Bodenwand 36 ein Anschlußkanal 87, der aus der Bodenwand 36 austritt und mit einer flexiblen Unterdruckleitung 88, also einem Schlauch, verbunden ist.

Die Packungsrohre 31 sind bei dem gezeigten Ausführungsbeispiel im Bereich der Einschuböffnung 32 als starres, im Querschnitt geschlossenes Mundstück 106 ausgebildet. Im Bereich dieses Mundstücks 106 befinden sich auch die Saugkanäle 86. Der bewegliche Teil der Oberwand 37 schließt an dieses Mundstück 106 an. Durch das starre Mundstück 106 findet eine besonders präzise Formgebung der Packung 20 bei der Einschubbewegung statt. Darüber hinaus wird die Banderole 26 mit besonderer Genauigkeit an die Packung 20 angedrückt und angeformt.

Die Saugluft bzw. der Unterdruck wird über ein zentrales, gemeinsames Unterdruckorgan verteilt. Dieses besteht hier aus einer Saugscheibe 89 mit an ihrer radialen Außenfläche mündenden Sauganschlüssen 90. Mit diesen sind die Unterdruckleitungen 88 verbunden. Die Sauganschlüsse 90 wiederum stehen im Bereich einer Seitenfläche der Saugscheibe 89 mit einem Verteilersegment 91 in Verbindung. Dieses ist als offene Nut in einer feststehenden Verteilerscheibe 92 gebildet. Das Verteilersegment 91 ist in geeigneter Weise mit einer Unterdruckquelle verbunden.

Die Saugscheibe 89 ist auf einer drehend angetriebenen Welle 93 gelagert. Der Antrieb der Saugscheibe 89 erfolgt synchron mit der (kontinuierlichen) Förderbewegung der Packungsrohre 31. Die Saugscheibe 89 ist, wie insbesondere aus Fig. 2 ersichtlich mittig, innerhalb des von dem Rohrförderer 41 umschlossenen Bereichs angeordnet. Durch die Gestaltung desselben (Umlenkung über vier Umlenkwalzen) sind veränderliche Abstände gegeben, die durch entsprechende Längen der verformbaren Unterdruckleitungen 88 ausgeglichen werden. Das zur Übertragung des Unterdrucks dienende Verteilersegment 91 erstreckt sich in einem Teilbereich des Umfangs der Saugscheibe 89 derart, daß während eines Teilabschnitts der Übergabestrecke 56 Unterdruck im Bereich der Saugbohrungen 84, 85 erzeugt wird. Nach Mitnahme der Banderole 26 durch eine Packung 20 wird die Saugluft im Bereich der Saugbohrungen 84, 85 weggesteuert.

Die Banderolen 26 werden den Packungsrohren 31 durch einen gesonderten Banderolenförderer 94 zugeführt. Dieser ist hier als Banderolenwalze ausgebildet, die kontinuierlich drehend angetrieben wird, und zwar gleichlaufend mit den Packungsrohren 31.

Der Banderolenförderer 94 befindet sich im Bereich einer aufrechten Förderstrecke des Rohrförderers 41, nämlich im Bereich eines Fördertrums 95. Der Banderolenförderer 94 ist vor den die Banderolen 26 aufnehmenden Stirnseiten der Packungsrohre 31 angeordnet. Die Relativstellung ist derart, daß die Umfangsfläche der Banderolenwalze an die Stirnseiten der Packungsrohre 31 heranführt, und zwar im Bereich von Bodenwand 36 und Oberwand 37.

Der walzenförmige Banderolenförderer 94 ist bei dem vorliegenden Ausführungsbeispiel mit radial vorstehenden, rippenartigen Banderolenträgern 96 versehen. An diesen liegen die Banderolen 26 mit einem mittleren, streifenförmigen Bereich an. An der freien Anlagefläche der Banderolenträger 96 münden Saugbohrungen 97 zum Halten der Banderolen. Bei der Übergabe derselben an das Packungsrohr 31 werden die Saugbohrungen 97 belüftet.

Dem Banderolenförderer 94 ist ein Beleimungsaggregat 98 zugeordnet. Mit diesem werden seitliche Leimflächen bzw. -streifen auf die Randbereiche der Banderolen 26 aufgetragen zur Verbindung mit der Packung 20. Das Beleimungsaggregat 98 ist mit einem walzenförmigen Leimauftragsorgan 99 versehen, welches Leim streifenförmig einem Leimbehälter 100 entnimmt. Das Leimauftragsorgan 99 enthält jeweils rippenartige, radiale Vorsprünge 101, an deren Außenseite sich Leim befindet. Die Vorsprünge 101 sind paarweise angeordnet, mit einem Abstand voneinander, der der Anordnung von Leimstreifen auf einer Banderole 26 entspricht. Diese werden auf einer Förderwalze 102 derart an dem Leimauftragsorgan 99 vorbeibewegt, daß dabei die Leimstreifen von den Vorsprüngen 101 auf die nach außen gekehrte Seite der Banderolen 26 übertragen werden. Die Banderolen werden dabei durch Saugluft auf der Förderwalze 102 gehalten. Im Anschluß daran werden die mit seitlichen Leimstreifen versehenen Banderolen 26 an den Banderolenförderer 24 bzw. an jeweils einen Banderolenträger 96 desselben übergeben. Die Banderole 26 liegt mit einem Bereich zwischen den Leimstreifen an dem Banderolenträger 96 an.

Bei der Übergabe der Banderole 26 an ein Packungsrohr 31 befinden sich die Leimstreifen an der Außenseite, so daß sie der Packung 20 zugekehrt sind.

Die parallel zueinander laufenden Förderer für die diesen zugeordneten Organe, nämlich Zahnriemen 42, 43 sowie 58, 79, sind an einem gemeinsamen Tragorgan gelagert. Es handelt sich dabei um eine durchgehende Maschinenplatte 103 als Teil eines Maschinengestells 104. In der Maschinenplatte 103 sind im Bereich der Zahnriemen jeweils Vertiefungen 105 gebildet, in denen die Zahnriemen laufen.

Die Vorrichtung ist auch für die Verarbeitung solcher Packungen geeignet, bei denen eine Banderole 26 nicht anzubringen ist. Hierbei fehlen die zur Bereithaltung und Übergabe der Banderole erforderlichen Organe.

## Patentansprüche

1. Vorrichtung zur Formgebung bzw. Formstabilisierung von quaderförmigen, miteinander verklebten Faltlappen aufweisende (Zigaretten-) Packungen (20), mit langgestreckten, schachtförmigen Packungshaltern, deren Querschnitt dem der Packungen (20) entspricht und die an einem Endlosförderer (41) mit zueinander parallelen Längsachsen angeordnet sind, wobei Packungen (20) über eine Einschuböffnung (32) in den Packungshalter einführbar sind und dabei sich im Packungshalter befindende Packungen (20) verschieben, **gekennzeichnet** durch folgende Merkmale:
a) die Packungshalter sind als beidendig offene Pakkungsrohre (31) ausgebildet, in denen die Packungen (20) mit wechselseitiger Abstützung verschiebbar sind, derart, daß durch den Einschub einer Packung (20) in ein Packungsrohr (31) eine sich in diesem befindende Packung aus einer der Einschuböffnung (32) gegenüberliegenden Austrittsöffnung (33) ausschiebbar ist,
b) eine Vielzahl von Packungsrohren (31) ist durch den Endlosförderer (41) kontinuierlich umlaufend bewegbar, wobei im Bereich einer Übergabestrecke (56) die Einführung einer neuen Packung (20) in ein sowie der Ausschub einer Packung (20) aus diesem Packkungsrohr (31) erfolgt,
c) einen Packungsförderer (53), durch den die Packungen (20) synchron mit den Packungsrohren (31) kontinuierlich in queraxialer Richtung transportierbar und dabei auf die Einschuböffnung (32) der Packungsrohre (31) ausgerichtet sind, derart, daß die Packungen (20) während des gemeinsamen Transports durch synchron mit den Packungen (20) bewegte Einschuborgane in Längsrichtung in die zugeordneten Packungsrohre (31) einschiebbar sind.

2. Vorrichtung nach Anspruch 1, dadurch gekennzeichnet, daß der Rohrförderer (41) als Bandförderer ausgebildet ist mit zwei im Abstand voneinander angeordneten, parallel zueinander verlaufenden Förderbändern, insbesondere Zahnriemen (42, 43), an denen die nebeneinander liegenden Packungsrohre (31) befestigt sind.

3. Vorrichtung nach Anspruch 1 oder 2, dadurch gekennzeichnet, daß die Packungen längs einer geradlinigen, gemeinsamen, parallelen Förderstrecke (Übergabestrecke 56) eines Packungsförderers (53) für die Packungen (20) und des Rohrförderers (41) aus dem Packungsförderer (53) aus - und in die Packungsrohre (31) einschiebbar sind.

4. Vorrichtung nach Anspruch 1, dadurch gekennzeichnet, daß die Einschuborgane Schieber (71) sind und daß jedem Packungsrohr (31) ein in Längsrichtung desselben bewegbarer, mit den Packungsrohren (31) gleichlaufend geförderter Schieber (71) zugeordnet ist, wobei die Schieber (71) an einem gesonderten Schieberförderer (78) angebracht und während des Transports durch diesen in ihrer Längsrichtung bewegbar sind zum Einschieben jeweils einer Packung (20) in ein Packungsrohr (31).

5. Vorrichtung nach Anspruch 3, dadurch gekennzeichnet, daß der Packungsförderer (53) aus einem Endlosförderer (Zahnriemen 58) mit Taschen (57), je zur Aufnahme einer Packung (20), besteht, wobei die Taschen (57) auf die Packungsrohre ausgerichtet und die Schieber (71) zugleich zum Ausschieben von Packungen (20) aus den Taschen (57) sowie zum Einschieben in die Packungsrohre (31) dienen.

6. Vorrichtung nach Anspruch 4, dadurch gekennzeichnet, daß die Schieber (71) an einer Halterung, insbesondere an einer parallel zur Bewegungsrichtung der Schieber (71) verlaufenden Traverse (75) mittels Gleitstück (74) angebracht sind, wobei Schieberbewegungen durch Eingriff eines am Gleitstück (74) angebrachten Führungsstiftes (76) in eine ortsfeste Kurvennut (77) ausführbar sind.

7. Vorrichtung nach Anspruch 6, dadurch gekennzeichnet, daß die Traverse (75) einerseits mit dem Schieberförderer (78) (Zahnriemen 79) und andererseits mit dem Packungsförderer (53) (Zahnriemen 58) verbunden ist.

8. Vorrichtung nach Anspruch 6, dadurch gekennzeichnet, daß die Packungen (20) in Radialrichtung in die Taschen (57) des Packungsförderers (53) einführbar und in Axialrichtung aus diesen ausschiebbar sind insbesondere durch den Schieber (71).

9. Vorrichtung nach Anspruch 8, dadurch gekennzeichnet, daß die Taschen (57) aus einem Taschenboden (64) zur Auflage der Packungen (20) und seitlichen, querbewegbaren, insbesondere schwenkbaren Taschenwänden (65) besteht, wobei diese zur Aufnahme einer Packung (20) auseinanderbewegbar sind.

10. Vorrichtung nach Anspruch 1, dadurch gekennzeichnet, daß die Packungsrohre (31) wenigstens eine bewegbare Rohrwandung aufweisen, insbesondere eine gegen die Vorderseite (24) bzw. Rückseite (25) der Packung (20) bewegbare Oberwand (37), die in Richtung der Anlage an der Packung (20) elastisch beaufschlagt ist.

11. Vorrichtung nach Anspruch 10, dadurch gekennzeichnet, daß eine Bodenwand (36) und Seitenwände (34) des Packungsrohrs (31) ein einstückiges, im Querschnitt U-förmiges Werkstück bilden, wobei die Oberwand (37) bewegbar an oberen Rändern der Seitenwände (34) gelagert ist.

12. Vorrichtung nach Anspruch 1, dadurch gekennzeichnet, daß vor der Einschuböffnung (32) der Packungsrohre (31) jeweils ein streifenförmiger Zuschnitt, insbesonder eine (Steuer-)Banderole (26), bereitgehalten ist, derart, daß die Banderole beim Einschub einer Packung (20) in ein Packungsrohr (31) U-förmig um eine Stirnfläche (23) der Packung (20) sowie angrenzende Packungsfläche faltbar ist.

13. Vorrichtung nach Anspruch 12, dadurch gekennzeichnet, daß die Banderole (26) durch an der Stirnseite des Packungsrohrs (31) mündende Saugbohrungen (84, 85), insbesondere im Bereich von Bodenwand (36) und Oberwand (37), am Packungsrohr (31) fixierbar ist, wobei an die Saugbohrungen (84, 85) Saugkanäle (86) und Anschlußkanäle (87) im Packungsrohr (31) anschließen und diese über flexible Unterdruckleitungen (88) bzw. Schlauchleitungen mit einem gemeinsamen Verteilerorgan (Saugscheibe 89) verbunden sind, welches gleichlaufend mit den Packungsrohren (31) bewegbar ist.

14. Vorrichtung nach Anspruch 10, dadurch gekennzeichnet, daß ein der Einschuböffnung (32) zugekehrter Bereich des Packungsrohrs (31) als im Querschnitt geschlossenes, starres Mundstück (106) ausgebildet ist mit dem Querschnitt einer Packung (20).

15. Vorrichtung nach Anspruch 12, dadurch gekennzeichnet, daß die Banderolen (26) den Stirnenden der Packungsrohre (31) durch einen in Bewegungsrichtung der Packungsrohre (31) fördernden Banderolenförderer (94) zuführbar sind, der als Trommel ausgebildet ist und an dessen Umfang die Banderolen (26) mittels Saugluft fixiert sind, und zwar mit der Längserstreckung in achsparalleler bzw. achsialer Ausrichtung.

## Claims

1. Apparatus for shaping or stabilizing the shape of cuboidal (cigarette) packs (20) having folding tabs adhesively bonded to one another, with elongated, shaft-like pack holders whose cross-section corresponds to that of the packs (20) and which are arranged on an endless conveyor (41) longitudinally axis-parallel to one another, packs (20) being insertable via an inserting opening (32) into the pack holder, thereby shifting the packs (20) located in the pack holder, characterized by the following features:
a) the pack holders are designed as pack channels (31) open at both ends, in which the packs (20) can be shifted with alternating support, in such a way that by means of the insertion of one pack (20) into one pack channel (31), a pack located in this pack channel (31) can be ejected from a discharge opening (33) lying opposite the inserting opening (32),
b) a plurality of pack channels (31) are movable by the endless conveyor (41) to continuously circulate, the insertion of a fresh pack (20) into and the ejection of a pack (20) out of this pack channel (31) taking place in the region of a transfer track (56),
c) a pack conveyor (53), by means of which the packs (20) can be transported continuously in a cross-axial direction in synchronism with the pack channels (31) and are thereby aligned with the inserting opening (32) of the pack channels (31) in such a way that during the common transport the packs (20) are insertable in the longitudinal direction into the allocated pack channels (31) by means of inserting members moved in synchronism with the packs (20).

2. Apparatus according to Claim 1, characterized in that the channel conveyor (41) is designed as a belt conveyor with two conveyor belts running parallel to each other and arranged at a distance from each other, especially toothed belts (42, 43), to which the pack channels (31) lying next to each other are fastened.

3. Apparatus according to Claim 1 or 2, characterized in that the packs can be ejected out of the pack conveyor (53) and inserted into the pack channels (31) along a rectilinear, common, parallel conveyor track (transfer track 56) of a pack conveyor (53) for the packs (20) and of the channel conveyor (41).

4. Apparatus according to Claim 1, characterized in that the inserting members are slides (71) and in that each pack channel (31) is associated with a slide (71) being movable in the longitudinal direction of the pack channel (31) and being conveyed in synchronism therewith, the slides (71) being mounted on a separate slide conveyor (78) and being movable during transport by the latter in their longitudinal direction for pushing one pack (20) at a time into a pack channel (31).

5. Apparatus according to Claim 3, characterized in that the pack conveyor (53) consists of an endless conveyor (toothed belt 58) with pockets (57) for receiving one pack (20) each, the pockets (57) being aligned with the pack channels and the slides (71) simultaneously serving for pushing packs (20) out of the pockets (57) and for pushing them into the pack channels (31).

6. Apparatus according to Claim 4, characterized in that the slides (71) are mounted on a holding device, especially on a traverse (75) extending parallel to the direction of movement of the slides (71), by means of a sliding member (74), with the movements of the slides being conductable by means of a guide pin (76) attached to the sliding member (74) engaging in a stationary cam groove (77).

7. Apparatus according to Claim 6, characterized in that the traverse (75) is connected on the one hand to the slide conveyor (78) (toothed belt 79) and on the other hand to the pack conveyor (53) (toothed belt 58).

8. Apparatus according to Claim 6, characterized in that the packs (20) are insertable into the pockets (57) of the pack conveyor (53) in the radial direction and are ejectable therefrom, especially by the slide (71), in the axial direction.

9. Apparatus according to Claim 8, characterized in that the pockets (57) consist of a pocket bottom (64) for the packs (20) to rest on and transversely movable, in particular pivotable, lateral pocket walls (65), said pocket walls (65) being movable away from one another in order to receive a pack (20).

10. Apparatus according to Claim 1, characterized in that the pack channels (31) have at least one movable channel wall, especially a top wall (37) being movable against the front side (24) or rear side (25) of the pack (20), said movable wall being elastically loaded in the direction of abutment with the pack (20).

11. Apparatus according to Claim 10, characterized in that a bottom wall (36) and side walls (34) of the pack channel (31) form a single-piece workpiece having a U-shaped cross-section, the top wall (37) being movably mounted on upper edges of the side walls (34).

12. Apparatus according to Claim 1, characterized in that in front of the inserting opening (32) of the pack channels (31) in each case one strip-like blank, in particular a (control) label (26), is held ready in such a way that when a pack (20) is inserted into a pack channel (31) the label is foldable in a U-shape around an end face (23) of the pack (20) as well as an adjoining pack face.

13. Apparatus according to Claim 12, characterized in that the label (26) is fixable to the pack channel (31) by suction bores (84, 85) opening out at the end face of the pack channel (31), especially in the region of bottom wall (36) and top wall (37), suction conduits (86) and connecting conduits (87) in the pack channel (31) being connected to the suction bores (84, 85) and linked via flexible vacuum lines (88) or hose lines to a common distributing means (suction disc 89) which is movable in synchronism with the pack channels (31).

14. Apparatus according to Claim 10, characterized in that a portion of the pack channel (31) facing towards the inserting opening (32) is designed as a cross-sectionally closed and rigid mouthpiece (106) having the cross-section of a pack (20).

15. Apparatus according to Claim 12, characterized in that the labels (26) are feedable to the end faces of the pack channels (31) by means of a label conveyor (94) conveying in the moving direction of the pack channels (31), which label conveyor (94) is designed as a drum, the labels (26) being fixed to the periphery of this drum by means of suction air, specifically with their longitudinal direction being in axis-parallel or axial orientation.

## Revendications

1. Dispositif de formage, respectivement de stabilisation de forme, d'emballages (à cigarettes) (20) parallélépipédiques, présentant des languettes de pliage collées ensemble, avec des porte-emballages allongés, en forme de puits, dont la section transversale correspond à celle des emballages (20) et disposés, sur un transporteur sans fin (41), avec deux axes longitudinaux parallèles, les emballages pouvant être introduits dans les porte-emballages par une ouverture d'insertion (32), en déplaçant alors les emballages se trouvant dans les porte-emballages, caractérisé par les caractéristiques suivantes :
a) les porte-emballages sont réalisés sous forme de tuyaux d'emballages (31), ouverts aux deux extrémités, dans lesquels les emballages (20) sont déplaçables en alternant de côté, de manière que, par l'insertion d'un emballage (20) dans un tuyau d'emballage (31), un emballage, se trouvant dans ce dernier, puisse être éjecté par une ouverture de sortie (33) placée à l'opposé de l'ouverture d'entrée (32),
b) une pluralité de tuyaux d'emballage (31) est déplaçable en un mouvement de circulation continue, par le transporteur sans fin (41), l'introduction d'un nouvel emballage (20) s'effectuant, dans la zone d'un tronçon de transfert (56), dans un tuyau d'emballage (31), tout comme s'y effectue l'expulsion d'un emballage (20) hors de ce tuyau d'emballage (31),
c) un transporteur d'emballages (53), au moyen duquel les emballages (20) sont transportables, en synchronisme avec les tuyaux d'emballage (31), de façon continue, dans la direction transversale par rapport à l'axe, et ainsi alignés avec l'ouverture d'entrée (32) du tuyau d'emballage (31), de telle manière que les emballages (20) soient insérables pendant le transport conjoint, au moyen d'organes d'insertion, déplacés de façon synchrone par rapport aux emballages (20), en direction longitudinale, dans les tuyaux d'emballages (31) associés.

2. Dispositif selon la revendication 1, caractérisé en ce que le transporteur de tuyaux (41) est réalisé sous forme de transporteur à bande, comportant deux bandes transporteuses, disposées à distance l'une de l'autre, s'étendant parallèlement l'une par rapport à l'autre, en particulier de courroies dentées (42, 43), auxquelles les tuyaux d'emballage (31) sont fixés les uns à côté des autres.

3. Dispositif selon la revendication 1 ou 2, caractérisé en ce que les emballages sont insérables le long d'un tronçon de transport rectiligne, commun, parallèle (tronçon de transfert 56) d'un transporteur d'emballages (53) pour les emballages (20), et du transporteur à tuyau (41), depuis le transporteur à emballages (53), pour être déplacés hors des et à l'intérieur des tuyaux d'emballage (31).

4. Dispositif selon la revendication 1, caractérisé en ce que les organes d'insertion sont des poussoirs (71), et en ce qu'à chaque tuyau d'emballage (31) est associé un poussoir (71), déplaçable dans la direction longitudinale du tuyau d'emballage (31), véhicule à l'unisson avec les tuyaux d'emballage (31), les poussoirs (71) étant montés sur un transporteur à poussoirs (78) séparé, et déplaçables pendant le transport au moyen de celui-ci, dans leur direction longitudinale, en vue d'insérer chaque fois un emballage (20) dans un tuyau d'emballage (31).

5. Dispositif selon la revendication 3, caractérisé en ce que le transporteur à emballages (53) est composé d'un transporteur continu (courroie dentée 58), avec des poches (57), prévues chacune pour recevoir un emballage (20), les poches (57) étant orientées en direction des tuyaux d'emballage et les poussoirs (71) servant en même temps à l'expulsion d'emballages (20) hors des poches (57), ainsi qu'à l'insertion dans les tuyaux d'emballage (31).

6. Dispositif selon la revendication 4, caractérisé en ce que les poussoirs (71) sont montés sur une fixation, en particulier sur une traverse (75) s'étendant parallèlement à la direction de déplacement des poussoirs (71), au moyen de pièces de coulissement (74), des déplacements de poussoir pouvant être effectués par engagement d'une tige de guidage (76) montée sur la pièce de coulissement (74), dans une rainure formant came (77) fixe.

7. Dispositif selon la revendication 6, caractérisé en ce que la traverse (75) est reliée, d'une part, au transporteur à poussoirs (78) (courroie dentée 79), et, d'autre par, au transporteur à emballages (53) (courroie dentée 58).

8. Dispositif selon la revendication 6, caractérisé en ce que les emballages (20) sont insérables en direction radiale dans les poches (57) du transporteur à emballages (53) et, en particulier, expulsables par le poussoir (71).

9. Dispositif selon la revendication 8, caractérisé en ce que les poches (57) sont composées d'un fond de poche (64) destiné à la pose des emballages (20), et de parois de poches latérales (65), déplaçables transversalement, en particulier susceptibles de pivoter, susceptibles d'être écartées les unes des autres pour recevoir un emballage (20).

10. Dispositif selon la revendication 1, caractérisé en ce que les tuyaux d'emballage (31) présentent au moins une paroi tubulaire déplaçable, en particulier une paroi supérieure (37), déplaçable en, direction de la face avant (24), respectivement de la face arrière (25), de l'emballage (20), et sollicitée élastiquement dans la direction de l'appui sur l'emballage (20).

11. Dispositif selon la revendication 10, caractérisé en ce qu'une paroi de fond (36) et des parois latérales (34) du tuyau d'emballage (31) constituent une pièce d'oeuvre monobloc, à section transversale en U, la paroi supérieure (37) étant montée sur les bords supérieurs des parois latérales (34) de façon à pouvoir se déplacer.

12. Dispositif selon la revendication 1, caractérisé en ce que, devant chaque ouverture d'insertion (32) des tuyaux d'emballage (31), est maintenu prêt un flan, se présentant sous forme de bande, en particulier une banderole (de commande) (26), de manière que la banderole puisse être pliée en U autour d'une face frontale (23) de l'emballage (20) ainsi qu'autour de faces limitrophes de l'emballage, lors de l'insertion d'un emballage (20) dans un tuyau d'emballage (31).

13. Dispositif selon la revendication 12, caractérisé en ce que la banderole (26) peut être fixée sur le tuyau d'emballage (31), au moyen de perçages d'aspiration (84, 85), débouchant en face frontale du tuyau d'emballage (31), en particulier peut être fixée dans la zone de la paroi de fond (36) et de la paroi supérieure (37), des canaux d'aspiration (86) et des canaux de raccordement (87) se raccordant aux perçages d'aspiration (84, 85) et ceux-ci étant reliés, par des conduites à dépression (88) flexibles, respectivement par l'intermédiaire de tuyaux, à un organe distributeur (disque barillet d'aspiration 89) commun, déplaçable à l'unisson avec les tuyaux d'emballage (31).

14. Dispositif selon la revendication 10, caractérisé en ce qu'une zone, tournée vers l'ouverture d'insertion (32), du tuyau d'emballage (31), est réalisée sous forme de pièce d'embouchure (106) rigide, à section transversale fermée, et dotée de la section transversale d'un emballage (20).

15. Dispositif selon la revendication 12, caractérisé en ce que les banderoles (26) peuvent être amenées aux extrémités frontales des tuyaux d'emballage (31) au moyen d'un transporteur à banderoles (94), véhiculant dans la direction du déplacement des tuyaux d'emballage (31) et réalisé sous forme de tambour, à la périphérie duquel les banderoles (26) sont fixées au moyen d'une dépression, et notamment avec l'étendue longitudinale orientée dans la direction parallèle à l'axe, respectivement dans la direction axiale.
